# EUROPEAN PATENT SPECIFICATION

(11) **EP 2 077 209 B1**
(45) Date of publication and mention of the grant of the patent: **24.03.2010**
(21) Application number: 09000018.3
(22) Date of filing: 02.01.2009
(51) Int. Cl.: B60R 22/44

(54) **Vehicle seatbelt apparatus**
Fahrzeugsicherheitsgurtvorrichtung
Appareil de ceinture de sécurité de véhicule

(30) Priority: 07.01.2008 JP 2008000475
(43) Date of publication of application: 08.07.2009
(73) Proprietor: Honda Motor Co., Ltd., Minato-ku Tokyo 107-8556 (JP)
(72) Inventor: Odate, Shotaro, Wako-shi Saitama, 351-0193 (JP)
(74) Representative: Herzog, Markus

(56) References cited:
- EP-A- 1 712 435
- EP-A- 1 864 868
- DE-A1- 19 927 731
- US-A- 5 244 231
- US-A- 5 452 862
- US-A1- 2003 094 534
- US-A1- 2005 184 184

## Description

### BACKGROUND OF THE INVENTION

### Field of the Invention

The present invention relates to a vehicle seat belt apparatus.

### Background Art

A conventionally known seat belt control device determines whether a vehicle occupant is heavily-clothed based on information on factors that may affect the amount of clothing of the vehicle occupant, such as ambient temperature outside the vehicle, a preset temperature of an air-conditioner, time and date, a current position and temperature in the vehicle. Upon detection that the vehicle is approaching an obstacle, the seat belt control device adjusts the degree of retraction of the webbing according to the amount of the clothing of the vehicle occupant (e.g., see Japanese Unexamined Patent Application, First Publication No. 2005-263077).

The seat belt control device relating to the above-described conventional art indirectly determines whether the vehicle occupant is heavily-clothed based merely on the information on the factors that may affect the amount of clothing of the vehicle occupant. A loosened state of the webbing is therefore not appropriately reflected in the adjustment of the retraction degree of the webbing. Consequently, the vehicle occupant may experience excessive discomfort during retraction of the webbing.

The invention is made in view of the aforementioned circumstances, and an object thereof is to provide a vehicle seat belt apparatus in which retraction of a webbing is controlled appropriately.

Another conventional vehicle seat belt apparatus is known from US 2005/0184184 A according to the preamble of claim 1.

### SUMMARY OF THE INVENTION

(A) A first aspect of the invention provides a following configuration: a vehicle seat belt apparatus including: a belt reel onto which a webbing is retracted; a position detection section which detects a rotational position of the belt reel; a motor which provides driving force to the belt reel so as to drive the belt reel to rotate; a clutch mechanism which couples and decouples the driving force between the motor and the belt reel; and a control section which controlls the clutch mechanism and an amount of electricity applied to the motor, wherein: the control section includes a return-amount-measurement section; the control section decouples the connection of the clutch mechanism after the motor is driven with a predetermined amount of electricity; and the return-amount-measurement section measures a return amount in a withdrawal direction of the belt reel based on a rotational position of the belt reel detected by the position detection section, after a decoupling by the clutch mechanism.
(B) The vehicle seat belt apparatus may have the following configuration: the control section further includes a constant-current-control mode executing section which executes in a constant-current-control mode in which the amount of electricity applied to the motor is kept in a predetermined amount; and the control section changes a target amount of electricity in the constant-current-control mode, or a control gain in the constant-current-control mode, based on the return amount.
(C) The vehicle seat belt apparatus may have the following configuration: the control section further includes a keep-position-control mode executing section which executes in a keep-position-control mode in which the amount of electricity applied to the motor is controlled to increase and decrease so that the rotational position of the belt reel is kept in a predetermined position; and the control section changes the target keeping position in the keep-position-control mode, or a control gain in the keep-position-control mode, based on the return amount.
(D) The vehicle seat belt apparatus may have the following configuration: the control section further includes an emergency-retraction-control mode executing section which executes in an emergency-retraction-control mode in which the amount of electricity applied to the motor is set as the maximum current, and the amount of electricity applied to the motor is controlled to increase and decrease so that the rotational position of the belt reel is kept in a predetermined retracted position when the rotational position of the belt reel detected by the position detection section reaches a predetermined retracted position; and the control section changes the predetermined retracted position in the emergency-retraction-control mode, or a control gain in the emergency-retraction-control mode based on the return amount.

According to the vehicle seat belt apparatus of (A), the webbing is retracted by the motor driven with a predetermined amount of electricity and then the driving force is decoupled by the clutch mechanism so that the return amount of the webbing in the withdrawal direction is measured. With this configuration, a loosened state of the webbing can be measured directly and thus a retraction degree of the webbing can be appropriately controlled based on the measurement result.

According to the vehicle seat belt apparatus of (B), the driving force is decoupled by the clutch mechanism so that the target amount of electricity or the control gain in the constant-current-control mode is changed based on the return amount of the webbing returning in the withdrawal direction. With this configuration, the loosened state of the webbing can be reflected in the execution of the constant-current-control mode appropriately.

According to the vehicle seat belt apparatus of (C), the driving force is decoupled by the clutch mechanism so that the target keeping position or the control gain in the keep-position-control mode is changed based on the return amount of the webbing returning in the withdrawal direction. With this configuration, the loosened state of the webbing can be reflected in the execution of the keep-position-control mode appropriately.

According to the vehicle seat belt apparatus of (D), the driving force is decoupled by the clutch mechanism so that the predetermined retracted position or the control gain in the emergency-retraction-control mode is changed based on the return amount of the webbing returning in the withdrawal direction. With this configuration, the loosened state of the webbing can be reflected in the execution of the emergency-retraction-control mode appropriately.

### BRIEF DESCRIPTION OF THE DRAWINGS

Fig. 1 is a schematic configuration diagram of a vehicle seat belt apparatus according to an embodiment of the invention.
Fig. 2 is a schematic configuration diagram of a vehicle seat belt apparatus according to the embodiment.
Fig. 3 is a cross-sectional view of main part of a retractor according to the embodiment.
Fig. 4 is an exploded perspective view of the retractor according to the embodiment.

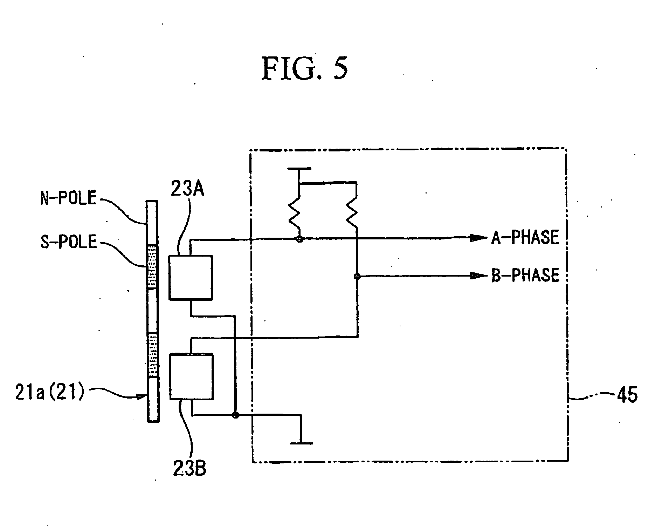

Fig. 5 is a schematic configuration diagram of a rotation detection section according to the embodiment.

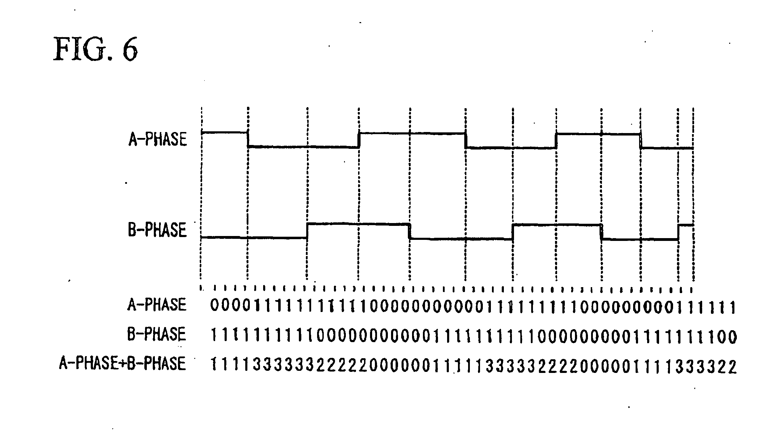

Fig. 6 shows A-phase and B-phase pulse signal waveforms output from each hall element of the rotation detection section according to the embodiment, digitalization of the signal levels of each phase, and numerical values obtained by adding the digitalized values of each phase.
Fig. 7 is a graph illustrating an example of variation in a withdrawn amount of the webbing restraining a lightly and heavily clothed vehicle occupant.
Fig. 8 is a flow chart illustrating an operation of the vehicle seat belt apparatus according to the embodiment.
Fig. 9 is a flow chart illustrating an elasticity-determination process shown in Fig. 8.
Fig. 10 is a flow chart illustrating an elasticity-determination process shown in Fig. 8.
Fig. 11 is a flow chart illustrating a constant-current-control process shown in Fig. 8.
Fig. 12 is a flow chart illustrating a keep-position-control process shown in Fig. 8.
Fig. 13 is a flow chart illustrating an emergency-retraction-control process shown in Fig. 8.

### DESCRIPTION OF THE PREFERRED EMBODIMENT

Referring now to the drawings, an embodiment of a vehicle seat belt apparatus according to the invention will be described.

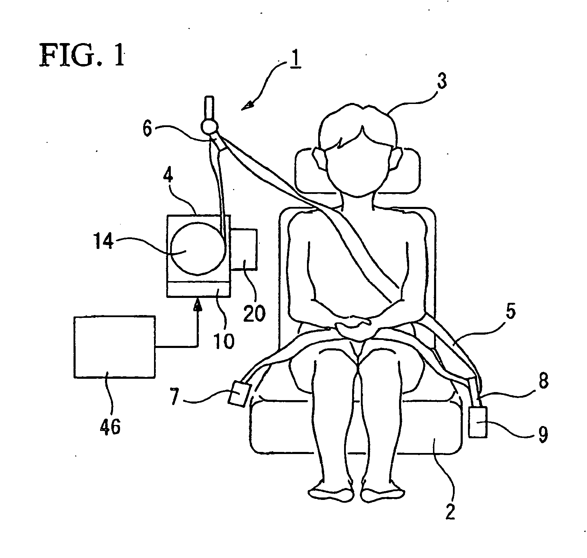

A vehicle seat belt apparatus 1 according to the present embodiment is a three-point seat belt device that may restrain a vehicle occupant 3 seated on a seat 2 as shown in Fig. 1, for example. A webbing 5 is withdrawn in a substantially upper vertical direction from a retractor 4 attached to a center pillar (not shown). The webbing 5 is made to pass through a through-anchor 6 supported at an upper side of the center pillar. A leading end of the webbing 5 is secured to a vehicle body floor via an outer-anchor 7 provided at an outer side of the seat 2 in a vehicle compartment. A tongue plate 8 is provided between the through-anchor 6 and the outer-anchor 7 through which the webbing 5 is passed. The tongue plate 8 can be fastened to or unfastened from a buckle 9 secured to the vehicle body floor at an inner side of the seat 2.

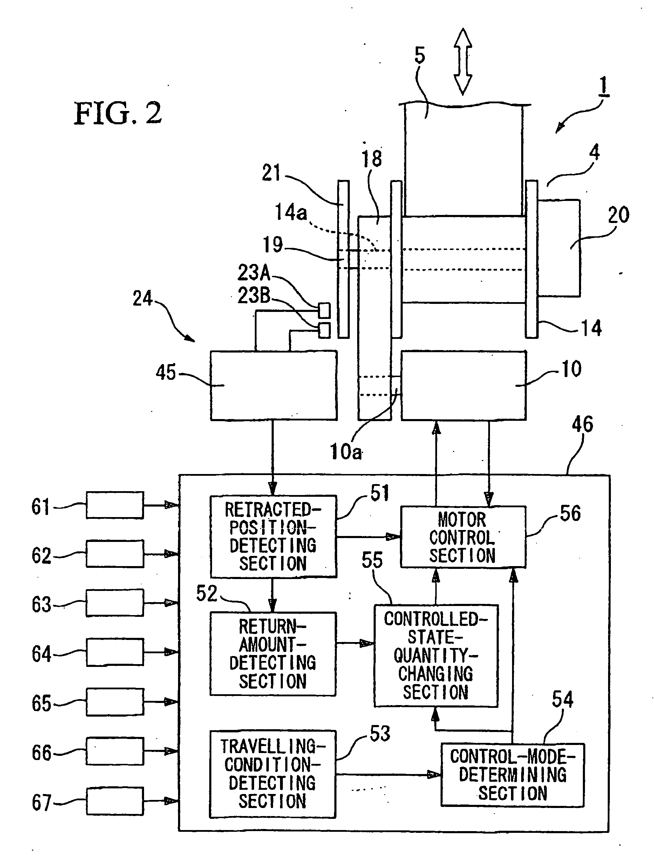

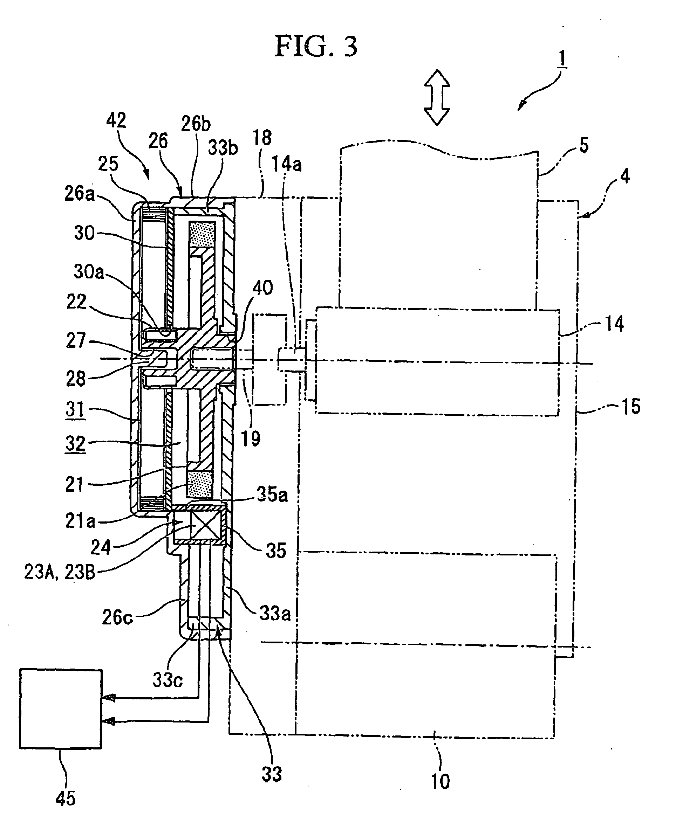

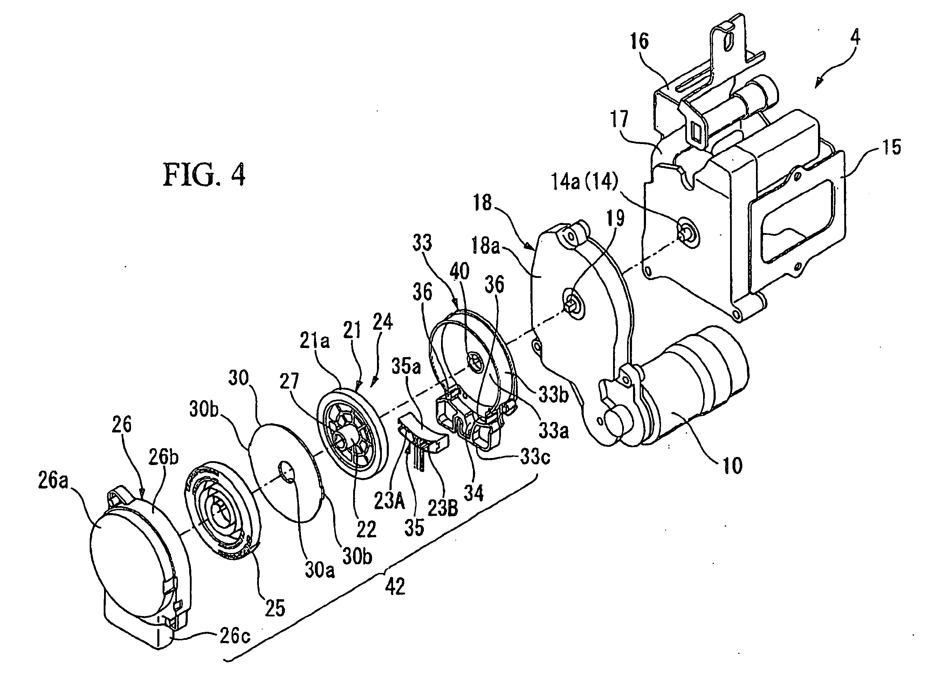

In the retractor 4, as shown in Figs. 2 to Fig. 4 for example, a belt reel 14 with the webbing 5 retracted thereon is rotatably supported by the retractor frame 15. A shaft 14a of the belt reel 14 protrudes outward (e.g., forward) from the retractor frame 15.

The webbing 5 is retracted onto the retractor 4 in an initial state (e.g., a state in which the webbing is not worn by the vehicle occupant). The webbing 5 is withdrawn by the vehicle occupant 3 from the belt reel 14 and is guided by a belt guide 16. The tongue plate 8 is fastened to the buckle 9. In this manner, the body (e.g., shoulder and waist) of the vehicle occupant 3 is restrained against the seat 2.

In the vehicle seat belt apparatus 1, the webbing 5 is retracted upon occurrence of, for example, a crash or an overturning. The webbing 5 is retracted by driving force of a motor 10 which provides rotative force to the belt reel 14 and by thrust generated by explosives in a pretensioner mechanism 17.

The shaft 14a of the belt reel 14 is connected to a rotational axis 10a of the motor 10 via a power transmission mechanism 18 so as to cooperate with the rotational axis 10a. The power transmission mechanism 18 includes a gear mechanism and a clutch for coupling and decoupling the power.

The power transmission mechanism 18 includes an output shaft 19 connected coaxially with the shaft 14a of the belt reel 14. The output shaft 19 protrudes forward.

The clutch in the power transmission mechanism 18 is controlled by a processor 46 to be described later. The clutch may decouple the motor 10 from the output shaft 19, and decouple the motor 10 from the belt reel 14 according to a rotating state of the motor 10.

For example, when the motor 10 rotates in the normal direction (i.e., a direction in which the belt reel 14 rotates in the normal direction so that the webbing 5 is retracted), the clutch couples the motor 10, the output shaft 19 and the belt reel 14.

When the motor 10 rotates in the reverse direction (i..e., a direction in which the belt reel 14 rotates in the reverse direction so that the webbing 5 is withdrawn), the clutch decouples the motor 10, the output shaft 19 and the belt reel 14. When an external force larger than the force required for driving the motor 10 in the reverse direction (e.g., rotary-driving force caused by the vehicle occupant withdrawing the webbing 5) acts in the direction in which the motor 10 is rotated in the reverse direction, the clutch keeps the coupling between the motor 10, the output shaft 19 and the belt reel 14 even if the motor 10 is rotating in the reverse direction. After the external force becomes smaller than the force required for driving the motor 10 in the reverse direction, the clutch decouples the motor 10, the output shaft 19 and the belt reel 14.

The retractor 4 includes an emergency locking mechanism 20 which mechanically locks the withdrawal of the webbing 5 upon, for example, the deceleration of the vehicle in an amount larger than a predetermined amount.

A disc-like magnetic rotor 21 having a magnetic ring 21 a at an outer periphery thereof is connected to a front end of the output shaft 19. A connecting shaft 22 secured to an axial center of the magnetic rotor 21 protrudes forward. The magnetic ring 21 a is magnetized such that opposite polarities are alternately arranged along the circumferential direction thereof. That is, these magnetic poles have different magnetic properties depending on the position along the circumferential direction of the magnetic ring 21a.

A pair of hall elements 23A and 23B is arranged along the circumferential direction of the magnetic ring 21a in a close but non-contacting manner. The magnetic rotor 21, the hall elements 23A and 23B and other components altogether constitute a rotation detection section 24 for detecting a rotating state of the belt reel 14.

A take-up spring 25 is connected to a connecting shaft 22 which is integrated with the magnetic rotor 21. The take-up spring 25 urges the belt reel 14 in the direction in which the webbing 5 is retracted. The take-up spring 25 may be a spiral spring. The take-up spring 25 is connected to the connecting shaft 22 at an inner peripheral end thereof and to an inner wall of a front cover 26 of the retractor 4 at an outer peripheral end thereof.

The front cover 26 is connected integrally with the retractor frame 15. An axial center bore 27 is formed at a leading end of the connecting shaft 22. A guide projection 28 protruding from the front cover 26 is inserted in the axial center bore 27.

In a state in which the belt reel 14 and the motor 10 are decoupled by the clutch operation, tension caused by the take-up spring 25 is exerted on the webbing 5.

The motor 10 and the belt reel 14 are decoupled from each other by the clutch upon rotation of the belt reel 14 in the retracting direction of the webbing 5 due to elastic force of the take-up spring 25 when, for example, the motor 10 is halted while the belt reel 14 and the motor 10 is coupled by the clutch.

A front cover 26 includes a spring accommodating portion 26a, an enlarged-diameter cylindrical portion 26b and a sensor accommodating portion 26c. The spring accommodating portion 26a has a closed-end cylindrical configuration to receive the take-up spring 25. The enlarged-diameter cylindrical portion 26b is disposed coaxially with the spring accommodating portion 26a and has a larger diameter than that of the spring accommodating portion 26a. The sensor accommodating portion 26c has a substantially rectangular configuration and is formed so as to be continuously integrated with a lower end of the enlarged-diameter cylindrical portion 26b. The enlarged-diameter cylindrical portion 26b receives the magnetic rotor 21 of the rotation detection section 24. The sensor accommodating portion 26c receives a substrate (not shown) with the hall elements 23A and 23B mounted thereon.

A substantially disc-shaped partition wall 30 is disposed between the spring accommodating portion 26a and the enlarged-diameter cylindrical portion 26b of the front cover 26. The partition wall 30 has a through hole 30a in which the connecting shaft 22 is inserted. The inside of the front cover 26 is divided by the partition wall 30 into a spring accommodation space 31 at the bottom side thereof and a rotor accommodation space 32 at the opening side thereof.

A pair of support projections 30b is provided along an outer periphery of the partition wall 30. The support projections 30b fit into alignment grooves (not shown) of a peripheral wall of the enlarged-diameter cylindrical portion 26b. The alignment grooves are formed so as to reach a boundary of the spring accommodating portion 26a and the enlarged-diameter cylindrical portion 26b. The support projections 30b abut bottoms of the alignment grooves so as to position the partition wall 30 within the front cover 26.

After the take-up spring 25, the partition wall 30, the magnetic rotor 21 and other components are accommodated in the front cover 26, a complementary cover 33 which is slightly smaller than the front cover 26 is fit into the front cover 26 to close the same. The spring accommodation space 31 is filled with lubricant for lubricating the take-up spring 25. The complementary cover 33 is secured to the front cover 26 with, for example, screws. An opening 40 is provided in a bottom wall 33a of the complementary cover 33 to allow for the connection of the output shaft 19 of the power transmission mechanism 18 with the magnetic rotor 21.

The complementary cover 33 includes a substantially cylindrical circular wall 33b and a rectangular wall 33c. The substantially cylindrical circular wall 33b fits into the enlarged-diameter cylindrical portion 26b of the front cover 26. The rectangular wall 33c is formed so as to be continuously integralated with both ends of the circular wall 33b and fits into the sensor accommodating portion 26c of the front cover 26. A sensor accommodating space 34 is formed inside the rectangular wall 33c so as to receive a substrate with the hall elements 23A and 23B mounted thereon.

The substrate is housed in a holder case 35. The holder case 35 is disposed in the sensor accommodating space 34 of the complementary cover 33, and is anchored by locking pawls 36 and 36 provided to protrude from the complementary cover 33.

The holder case 35 opens at the side facing the bottom of the front cover 26. When the holder case 35 is assembled to the front cover 26, a circular wall 35a facing the outer periphery of the magnetic rotor 21 and the circular wall 33b of the complementary cover 33 altogether constitute a circular wall. In a state in which the complementary cover 33 is fit to and secured to the front cover 26, end surfaces of these circular walls 33b and 35a abut the outer periphery of the partition wall 30 from the side of the rotor accommodation space 32.

The take-up spring 25, the partition wall 30, the magnetic rotor 21 and other components are accommodated in the front cover 26. The complementary cover 33 and the holder case 35 are assembled to the opening side of the front cover 26, altogether constituting a cover section 42. The cover section 42 is integrated with the power transmission mechanism 18 and the retractor frame 15 by using, for example, bolts.

The pair of hall elements 23A and 23B of the rotation detection section 24 is connected to the processor 46 via a sensor circuit 45 for signal processing. Pulse signals in accordance with magnetic variation detected by each of the hall elements 23A and 23B are input to the processor 46 after being subjected to predetermined processing in the sensor circuit 45.

A-phase or B-phase pulse signals output from each of the hall elements 23 A and 23B to the processor 46 are used as feedback signals for, for example, driving the motor 10. The processor 46 detects a rotational amount of the belt reel 14 (i.e., a withdrawn amount of the webbing 5) by, for example, calculating the A-phase and B-phase pulse signals. The processor 46 then detects the rotational direction of the belt reel 14 by comparing rising edges of the waveform of the A-phase and B-phase pulse signals.

For example, high-values of the A-phase and B-phase pulse signals output from each of the hall elements 23A and 23B are represented by 0, and low-values are represented by 1 so that A-phase and B-phase corresponding values are represented in the binary system. The A-phase corresponding value is represented by numerals of the next order of magnitude of the B-phase corresponding value. Values obtained by adding the A-phase and B-phase corresponding values and then converting the obtained binary numbers into the decimal numbers change as shown in Table 1.

It is assumed that the A-phase and B-phase pulse waveforms shown in Table 1 are taken during the normal rotation of the belt reel 14. Here, values obtained by adding the A-phase and B-phase values represent a predetermined first change pattern (e.g., 3 to 2 to 0 to 1). On the other hand, when belt reel 14 rotates in the reverse direction, values obtained by adding the A-phase and B-phase values represent a predetermined second change pattern (e.g., 3 to 1 to 0 to 2). It can therefore be determined that an abnormal condition is occurring if any change patterns other than the predetermined first and second change patterns are detected.

When the values obtained by adding the A-phase and B-phase values represent the predetermined first change pattern (e.g., 3 to 2 to 0 to 1), a count value of a single change event of the value obtained by adding the A-phase and B-phase values (obtained by subtracting the current value from the previous value) is +1. When the value obtained by adding the A-phase and B-phase values represent the predetermined second change pattern (e.g., 3 to 1 to 0 to 2), a count value of a single change event of the value obtained by adding the A-phase and B-phase values (obtained by subtracting the current value from the previous value) is -1. The total count value (cnt) of the pulses according to the retracted amount of the webbing 5 can be obtained by calculating the sum of the count values during the change of the values obtained by adding the A-phase and B-phase values while the belt reel 14 is rotating. The total count value (cnt) of the pulses changes as shown, for example, in the following table 1.

Correspondence between the change in the values obtained by adding the A-phase and B-phase values (obtained by subtracting the current value from the previous value) and the count values is shown in Table 2, for example, In table 2, +1 represents the normal rotation of the belt reel 14, -1 represents the reverse rotation of the belt reel 14, 0 represents no change in the value obtained by adding the A-phase and B-phase values and x represents an abnormal condition in which the belt reel 14 is not rotated in the normal rotation or the reverse rotation.

**[Table 1]**

| | |
|---|---|
| A-phase+ B-phase | 1 1 1 1 3 3 3 3 3 3 2 2 2 2 2 2 2 0 0 0 0 0 1 1 1 1 1 1 |
| previous value-current value | 0 0 0 0 1 0 0 0 0 0 1 0 0 0 0 0 0 1 0 0 0 0 1 0 0 0 0 0 |
| Cnt | 0 0 0 0 1 1 1 1 1 1 2 2 2 2 2 2 2 3 3 3 3 3 4 4 4 4 4 4 |

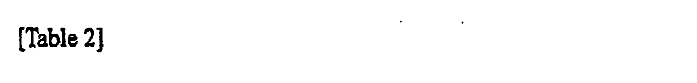

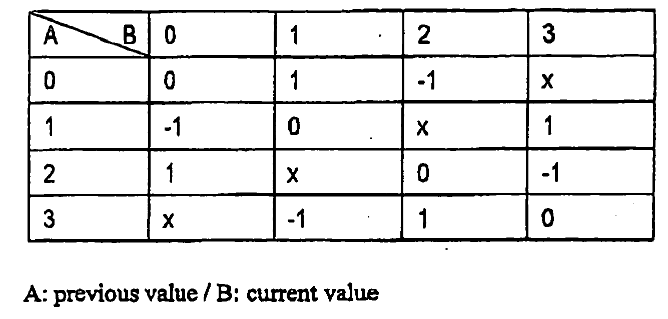

In the vehicle seat belt apparatus 1, the motor 10 is halted when the vehicle occupant wears the webbing 5 and when the vehicle is in its normal travelling state. Upon detection of a state in which the webbing 5 is not worn by the vehicle occupant, which is known, for example, by unfastening of the buckle 9, the motor 10 begins to be driven and the webbing 5 is retracted to a predetermined accommodation position. The retracted amount (or the withdrawn amount), and the moving direction of the webbing 5 are detected by the rotation detection section 24. The motor 10 is controlled to be driven based on the detection result of the rotation detection section 24.

The processor 46 includes, for example, a retracted-pvsition-detecting section 51, a return-amount-detecting section 52, a travelling-condition-detecting section 53, a control-mode-determining section 54, a controlled-state-quantity-changing section 55 and a motor control section 56.

For example, detection signals output from a buckle switch (buckle SW) 61, an external sensor 62, an acceleration sensor 63, a yaw rate sensor 64, a speed sensor 65, a temperature sensor 66 and a current sensor 67, and A-phase and B-phase pulse signals are input to the processor 46. The buckle switch (buckle SW) 61 detects whether the tongue plate 8 is fastened to the buckle 9. The external sensor 62 consists of radar or a camera for detecting objects existing outside the vehicle. The acceleration sensor 63 detects acceleration and deceleration of the vehicle body. The yaw rate sensor 64 detects a yaw rate of the vehicle body. The speed sensor 65 detects the vehicle speed. The temperature sensor 66 is disposed on a substrate (not shown) of the processor 46 for detecting temperatures. The current sensor 67 detects current applied to the motor 10. The A-phase and B-phase pulse signals are output from the pair of hall elements 23A and 23B and subjected to predetermined processing in the sensor circuit 45.

The retracted-position-detecting section 51 computes a rotational position of the belt reel 14 based on the A-phase and B-phase pulse signals output from the rotation detection section 24, and sets the detected rotational position as the retracted position.

The rotational position (i.e., the retracted position) of the belt reel 14 increases as the rotational amount of the belt reel 14 in the normal direction i.e., the retracted amount of the webbing 5 on the belt reel 14 increases. Here, a position in which the retracted amount of the webbing 5 on the belt reel 14 is 0 (i.e. a position in which the withdrawn amount is the predetermined maximum amount) is set as an original point (i.e., 0), and the direction in which the belt reel 14 is normally rotated is defined as a normal direction.

The return-amount-detecting section 52 measures, based on the rotational position of the belt reel 14 output from the retracted-position-detecting section 51, the return amount of the belt reel 14 in the withdrawing direction upon decoupling of the motor 10, the output shaft 19 and the belt reel 14 by the clutch of the power transmission mechanism 18 after the motor 10 is driven with a predetermined amount of electricity.

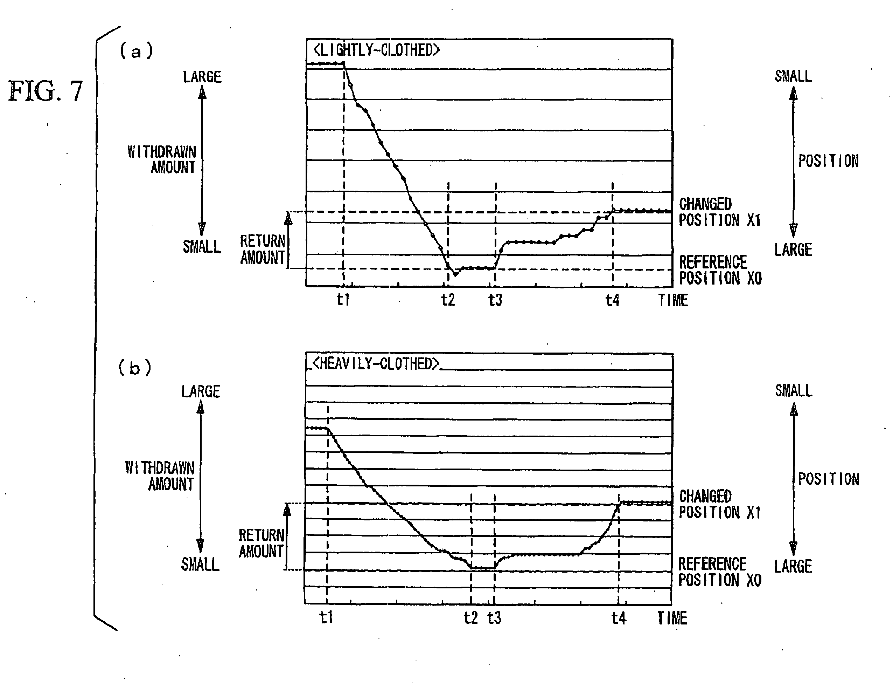

For example, as shown in part (a) and part (b) of Fig. 7, an application of electricity to the motor 10 is started by the motor control section 56 with a predetermined current 10 when the tongue plate 8 is fastened to the buckle 9 and a lightly-clothed or heavily-clothed vehicle occupant wears the webbing 5. Then, the webbing 5 is retracted onto the belt reel 14 and the rotational position of the belt reel 14 begins to increase as shown in areas after t1 in the graphs.

Thereafter, increase in the retracted amount of the webbing 5 onto the belt reel 14 stops and the rotational position of the belt reel 14 becomes substantially constant as shown in areas between t2 and t3 while the electricity is continuously applied to the motor with the predetermined current 10. The return-amount-detecting section 52 stores the rotational position of the belt reel 14 at this time as a reference position X0. Then, the motor control section 56 rotates the motor 10 in the reverse direction so as to decouple the motor 10, the output shaft 19 and the belt reel 14 by the clutch in the power transmission mechanism 18. Thus the belt reel 14 can be rotated regardless of the operation of the motor 10, and rotates in the withdrawal direction of the belt reel 14 as shown in an area after t3 in accordance with elasticity of the body or clothing of the vehicle occupant. Then, the webbing 5 is withdrawn from the belt reel 14 and the rotational position of the belt reel 14 begins to decrease.

Thereafter, increase in the withdrawn amount of the webbing 5 from the belt reel 14 stops and the rotational position of the belt reel 14 becomes substantially constant as shown in an area after t4 while the motor 10, the output shaft 19 and the belt reel 14 are continuously decoupled by the clutch in the power transmission mechanism 18. The return-amount-detecting section 52 stores the rotational position of the belt reel 14 at this time as a changed position X1. Then, the return-amount-detecting section 52 sets a value (X0-X1) obtained by subtracting the changed position X1 from the reference position X0 as the return amount of the webbing 5.

The travelling-condition-detecting section 53 detects several predetermined travelling conditions of the vehicle based on detection signals output from the sensors 63, 64 and 65 for detecting the vehicle travelling state quantity and detection signals output from the external sensor 62. The predetermined travelling conditions may include: a controlled condition in which rapid change in vehicle travelling behavior is suppressed by controlling the driving of a braking device; a controlled condition in which idle running of driven wheels on, for example, a slippery road surface is prevented; a condition in which excessively large lateral acceleration occurs when, for example, the vehicle travels around a curve; a condition in which lateral slipping, caused by, such as over-steering and under-steering, occurs; and a condition in which the vehicle may possibly crash into or touch an object outside the vehicle.

The control-mode-determining section 54 selects, for example, one of the constant-current-control mode, the keep-position-control mode and the emergency-retraction-control mode as the control mode of the motor 10 in accordance with the detection result of the vehicle travelling condition output from the travelling-condition-detecting section 53.

When it is detected, for example, that the vehicle travelling condition is a condition in which rapid change in vehicle travelling behavior is suppressed by controlling the driving of a braking device or a condition in which idle running of driven wheels on, for example, a slippery road surface is prevented, the control-mode-determining section 54 selects the constant-current-control mode in which the amount of electricity applied to the motor 10 is controlled to a predetermined constant amount.

When it is detected, for example, that the vehicle travelling condition is a condition in which excessively large lateral acceleration occurs when, for example, the vehicle travels around a curve or a condition in which lateral slipping, such as over-steering and under-steering, occurs, the control-mode-determining section 54 selects the keep-position-control mode in which the amount of electricity applied to the motor 10 is controlled to increase and decrease so that the rotational position of the belt reel 14 is kept in a predetermined position.

When it is detected, for example, that the vehicle travelling condition is a condition in which the vehicle may possibly crash into or bump an object outside the vehicle, the control-mode-determining section 54 selects the emergency-retraction-control mode in which the amount of electricity applied to the motor 10 is set as the maximum current, and the amount of electricity applied to the motor 10 is controlled to increase and decrease so that the rotational position of the belt reel 14 is kept in a predetermined retracted position, when the rotational position of the belt reel 14 reaches a predetermined retracted position.

The controlled-state-quantity-changing section 55 changes at least a control target or a control gain in the control mode of the motor 10 output from the control-mode-determining section 54 in accordance with the return amount output from the return-amount-detecting section 52.

The motor control section 56 controls the electricity applied to the motor 10 while setting time for driving and halting the motor 10 and target current based on the rotational position of the belt reel 14 output from the retracted-position-detecting section 51, the control mode of the motor 10 output from the control-mode-determining section 54 and the control target and the control gain output from the controlled-state-quantity-changing section 55.

Now, operation of the thus-configured vehicle seat belt apparatus 1 according to the present embodiment will be described.

A series of processes in the following steps S01 to S07 is repeatedly executed at predetermined intervals when, for example, the buckle 9 is fastened to the tongue plate 8.

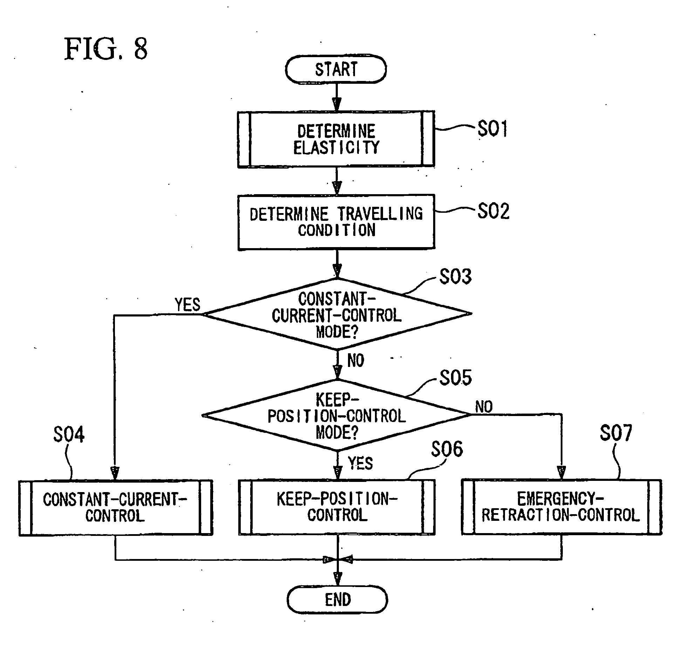

First, in step S01 shown in Fig. 8 for example, a process of elasticity-determination, which is to be described later, is executed.

In step S02, a predetermined travelling condition of the vehicle is determined based on detection signals output from the sensors 63, 64 and 65 for detecting vehicle travelling state quantity and detection signals output from the external sensor 62. The predetermined travelling conditions may include: a controlled condition in which rapid change in vehicle travelling behavior is suppressed by controlling the driving of a braking device; a controlled condition in which idle running of driven wheels on, for example, a slippery road surface is prevented; a condition in which excessively large lateral acceleration occurs when, for example, the vehicle travels around a curve; a condition in which lateral slipping, such as over-steering and under-steering, occurs; and a condition in which the vehicle may possibly crash into or touch an object outside the vehicle.

In step S03, it is determined, based on the determination result of vehicle travelling condition, whether the vehicle travelling condition is, for example, a controlled condition in which rapid change in vehicle travelling behavior is suppressed by controlling the driving of a braking device or a controlled condition in which idle running of driven wheels on, for example, a slippery road surface is prevented, and whether the constant-current-control mode in which the amount of electricity applied to the motor 10 is controlled to a predetermined constant amount is to be executed as the control mode of the motor 10.

If the determination result is affirmative, the routine proceeds to step S04 where a constant-current-control process, which is to be described later, is executed and the series of processes completes.

If the determination result is negative, the routine proceeds to step S05.

In step S05, it is determined, based on the determination result of vehicle travelling condition, whether the vehicle travelling condition is a condition in which excessively large lateral acceleration occurs when, for example, the vehicle travels around a curve, or a condition in which lateral slipping, such as over-steering and under-steering, occurs, and whether the keep-position-control mode for increasing and decreasing an amount of electricity applied to the motor 10 such that the rotational position of the belt reel 14 is kept in a predetermined position is to be executed as the control mode of the motor 10.

If the determination result is affirmative, the routine proceeds to step S06 where the keep-position-control process, which is to be described later, is executed and the series of processes completes.

If the determination result is negative, the routine proceeds to step S07 where a emergency-retraction-control process, which is to be described later, is executed and the series of processes completes.

Now, the above-described elasticity-determination process in step S11 will be described.

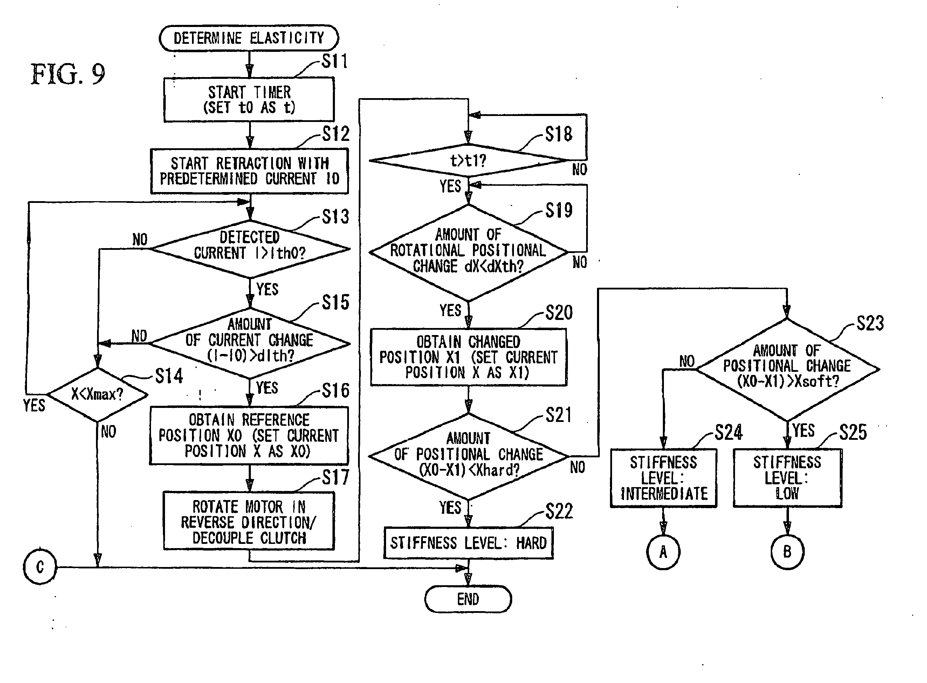

First, in step S11 shown in Fig. 9 for example, a timer is initialized by setting a predetermined initial value t0 as a timer value t of an appropriate timer, and clocking with the timer is started.

In step S12, application of electricity to the motor 10 is started with the predetermined current I0 and retraction of the webbing 5 onto the belt reel 14 is started.

In step S13, it is determined whether the current I detected by the current sensor 67 is larger than the predetermined current threshold Ith0.

If the determination result is negative, the routine proceeds to step S14.

If the determination result is affirmative i.e., if the current required for driving the motor 10 in the normal direction increases as the load for the retraction of the webbing 5 by the belt reel 14 increases, the routine proceeds to step S 15.

In step S14, it is determined whether the current rotational position X of the belt reel 14 is smaller than the maximum retracted position Xmax, which is equivalent to the predetermined maximum retracted amount of the webbing 5.

If the determination result is affirmative, the routine returns to the above-described step S13.

If the determination result is negative, the routine proceeds to the end of Fig. 8 where the process completes.

In step S 15, it is determined whether an amount of current change (I-I0) obtained by subtracting the predetermined current I0 from the detected current I is larger than the predetermined current change threshold dIth.

If the determination result is negative, the routine proceeds to the above-described step S14.

If the determination result is affirmative i.e., if the current required for driving the motor 10 in the normal direction increases as the load for the retraction of the webbing 5 by the belt reel 14 increases, the routine proceeds to step S16.

In step S16, the current rotational position X of the belt reel 14 detected at this time is set as a reference position X0.

In step S17, the motor 10 is rotated in the reverse direction so as to decouple the motor 10 and the belt reel 14 by the clutch in the power transmission mechanism 18.

In step S 18, it is determined whether the timer value t of the timer at this time is larger than the predetermined time t1.

If the determination result is negative, the determination process of step S18 is repeated.

If the determination result is affirmative, the routine proceeds to step S19.

In step S19, it is determined whether an amount of rotational positional change dX between the rotational position of the belt reel 14 of the previous process and the rotational position of the belt reel 14 in the current process is smaller than a predetermined amount of rotational positional change threshold dXth.

If the determination result is negative, the determination process of step S 19 is repeated.

If the determination result is affirmative i.e., if the rotational position of the belt reel 14 becomes substantially constant while the belt reel 14 can be rotated regardless of the operation of the motor 10, the routine proceeds to step S20.

In step S20, the current rotational position X of the belt reel 14 detected at this time is set as the changed position X1.

In step S21, it is determined whether the amount of positional change (X0-X1) obtained by subtracting the changed position X1 from the reference position X0 is smaller than a predetermined first stiffness determination threshold Xhard.

If the determination result is affirmative, the routine proceeds to step S22 where a stiffness level constituting the elasticity information is set as hard. Then, the routine proceeds to the end where the process completes.

If the determination result is negative, the routine proceeds to step S23.

In step S23, it is determined whether the amount of positional change (X0-X1) is, for example, larger than a predetermined second stiffness determination threshold Xsoft (>Xhard), which is larger than the predetermined first stiffness determination threshold Xhard.

If the determination result is negative, the routine proceeds to step S24 where the stiffness level constituting the elasticity information is set as intermediate. Then, the routine proceeds to step S31, which is to be described later.

If the determination result is negative, the routine proceeds to step S25 where the stiffness level constituting the elasticity information is set as low. Then, the routine proceeds to step S41, which is to be described later.

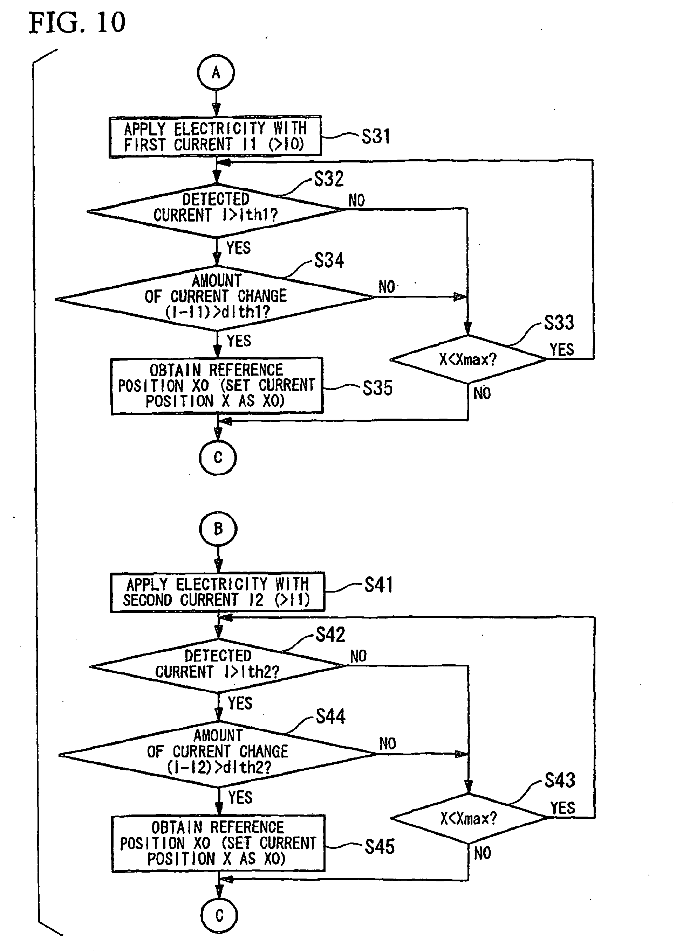

In step S31, for example, shown in Fig. 10, application of electricity to the motor 10 is started with a predetermined first current I1 which is larger than the predetermined current I0 and retraction of the webbing 5 onto the belt reel 14 is started.

In step S32, it is determined whether the current I detected by the current sensor 67 is larger than a predetermined first current threshold Ith1.

If the determination result is negative, the routine proceeds to step S33.

If the determination result is affirmative i.e., if the current required for driving the motor 10 in the normal direction increases as the load for the retraction of the webbing 5 by the belt reel 14 increases, the routine proceeds to step S34, which is to be described later.

In step S33, it is determined whether the current rotational position X of the belt reel 14 is smaller than the maximum retracted position Xmax, which is equivalent to the predetermined maximum retracted amount of the webbing 5.

If the determination result is affirmative, the routine returns to the above-described step S32.

If the determination result is negative, the routine proceeds to the end where the process completes.

In step S34, it is determined whether the amount of current change (I-I1) obtained by subtracting the predetermined first current I1 from the detected current I is larger than the predetermined first current change threshold dIth1.

If the determination result is negative, the routine proceeds to the above-described step S33.

If the determination result is affirmative i.e., if the current required for driving the motor 10 in the normal direction increases as the load for the retraction of the webbing 5 by the belt reel 14 increases, the routine proceeds to step S35.

In step S35, the current rotational position X of the belt reel 14 detected at this time is set as the reference position XO, and the routine proceeds to the end where the process completes.

In step S41, for example, shown in Fig. 10, application of electricity to the motor 10 is started with a predetermined second current 12 which is larger than the predetermined first current 11 and retraction of the webbing 5 onto the belt reel 14 is started.

In step S42, it is determined whether the current I detected by the current sensor 67 is larger than a predetermined second current threshold Ith2.

If the determination result is negative, the routine proceeds to step S43.

If the determination result is affirmative i.e., if the current required for driving the motor 10 in the normal direction increases as the load for the retraction of the webbing 5 by the belt reel 14 increases, the routine proceeds to step S44, which is to be described later.

In step S43, it is determined whether the current rotational position X of the belt reel 14 is smaller than the maximum retracted position Xmax, which is equivalent to the predetermined maximum retracted amount of the webbing 5.

If the determination result is affirmative, the routine returns to the above-described step S42.

If the determination result is negative, the routine proceeds to the end where the process completes.

In step S44, it is determined whether the amount of current change (I-I2) obtained by subtracting the predetermined second current I2 from the detected current I is larger than a predetermined second current change threshold dIth2.

If the determination result is negative, the routine proceeds to the above-described step S43.

If the determination result is affirmative i.e., if the current required for driving the motor 10 in the normal direction increases as the load for the retraction of the webbing 5 by the belt reel 14 increases, the routine proceeds to step S45.

In step S45, the current rotational position X of the belt reel 14 detected at this time is set as the reference position X0. Then, the routine proceeds to the end where the process completes.

Now, the above-described constant-current-control process in step S04 will be described.

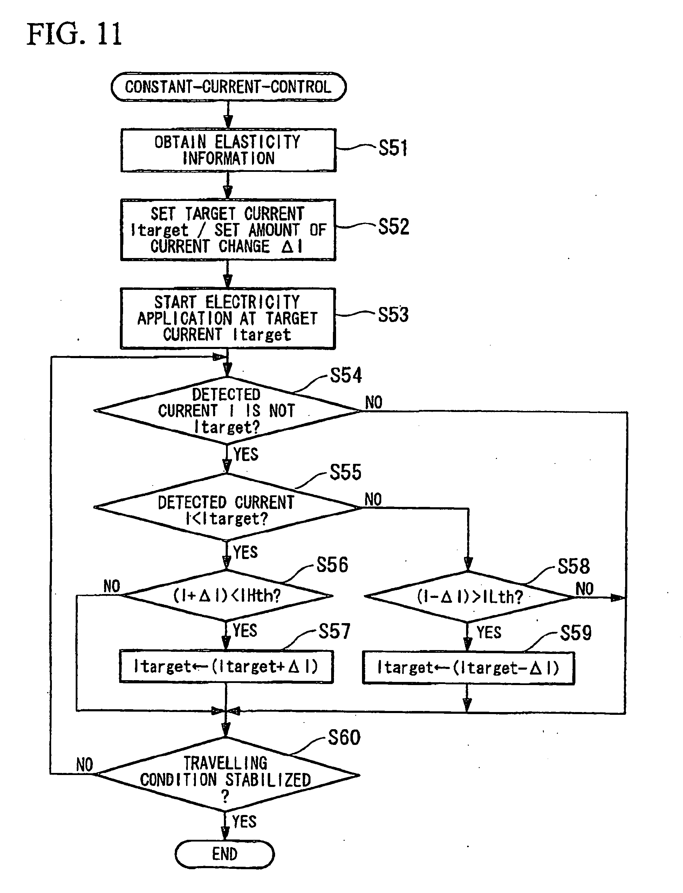

First, in step S51 shown in Fig. 11 for example, elasticity information including the stiffness level is obtained.

In step S52, a target current Itarget as a target value in the constant-current-control and an amount of current change ΔI which is a control gain in the constant-current-control are set up.

For example, when the stiffness level is high, the target current Itarget and the amount of current change ΔI are smaller than those in the case where the stiffness level is intermediate. When the stiffness level is low, the target current Itarget and the amount of current change ΔI are larger than those in the case where the stiffness level is intermediate.

In step S53, application of electricity to the motor 10 is started at the target current Itarget.

In step S54, it is determined whether the current I detected by the current sensor 67 differs from the target current Itarget.

If the determination result is negative, that is, if the detected current I is equivalent to the target current Itarget, the routine proceeds to step S60, which is to be described later.

If the determination result is affirmative, the routine proceeds to step S55.

In step S55, it is determined whether the detected current I is smaller than the target current Itarget.

If the determination result is negative, the routine proceeds to step S58, which is to be described later.

If the determination result is affirmative, the routine proceeds to step S56.

In step S56, it is determined whether a value (I+ΔI) obtained by adding the amount of current change ΔI to the detected current I is smaller than a predetermined high-side current threshold IHth.

If the determination result is negative, the routine proceeds to step S60, which is to be described later.

If the determination result is affirmative, the routine proceeds to step S57. In step S57, a value (Itarget+ΔI) obtained by adding the amount of current change ΔI to the target current Itarget is newly set as the target current Itarget. Then, the routine proceeds to step S60.

In step S58, it is determined whether a value (I-ΔI) obtained by subtracting an amount of current change ΔI from the detected current I is larger than a predetermined low-side current threshold ILth.

If the determination result is negative, the routine proceeds to step S60, which is to be described later.

If the determination result is affirmative, the routine proceeds to step S59 where a value (Itarget-ΔI) obtained by subtracting the amount of current change ΔI from the target current Itarget is newly set as the target current Itarget. Then, the routine proceeds to step S60.

In step S60, it is determined whether the vehicle travelling condition is stabilized.

If the determination result is negative, the routine returns to the above-described step S54.

If the determination result is affirmative, the routine proceeds to the end where the process completes.

Now, the above-described keep-position-control process in step S06 will be described.

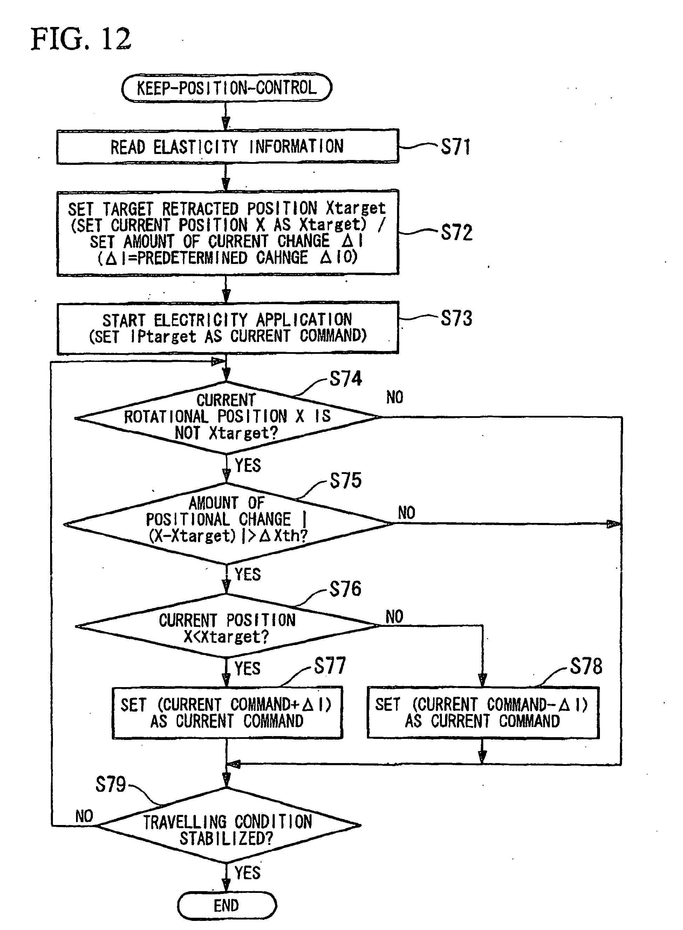

First, in step S71 shown in Fig. 12 for example, elasticity information including the stiffness level is obtained.

In step S72, the current position X of the rotational position of the belt reel 14 detected at this time is set as a target retracted position Xtarget, which is a target value for the rotational position of the belt reel 14 in the keep-position-control based on the elasticity information, and the predetermined change ΔI0 is set as the amount of current change ΔI as the control gain in keep-position-control.

For example, when the stiffness level is high, the target retracted position Xtarget and the amount of current change ΔI are smaller than those in the case where the stiffness level is intermediate. When the stiffness level is low, the target retracted position Xtarget and the amount of current change ΔI are larger than those in the case
where the stiffness level is intermediate.

In step S73, a predetermined target current IPtarget is set as a current command for applying electricity to the motor 10, and application of electricity is started in accordance with the current command.

In step S74, it is determined whether the current rotational position X of the belt reel 14 detected at this time differs from the target retracted position Xtarget.

If the determination result is negative, the routine proceeds to step S79, which is to be described later.

If the determination result is affirmative, the routine proceeds to step S75.

In step S75, it is determined whether the absolute value |(X-Xtarget)| of an amount of positional change obtained by subtracting the target retracted position Xtarget from the current position X is larger than a predetermined amount threshold of the positional change ΔXth.

If the determination result is negative, the routine proceeds to step S79, which is to be described later.

If the determination result is affirmative, the routine proceeds to step S76.

In step S76, it is determined whether the current position X is smaller than the target retracted position Xtarget.

If the determination result is affirmative, the routine proceeds to step S77 where a value (current command+ΔI) obtained by adding the amount of current change ΔI to the current command is newly set as a current command. Then, the routine proceeds to step S79.

If the determination result is negative, the routine proceeds to step S78 where a value (current command-ΔI) obtained by subtracting the amount of current change ΔI from the current command is newly set as a current command. Then, the *routine proceeds to step S79.

In step S79, it is determined whether the vehicle travelling condition is stabilized.

If the determination result is negative, the routine returns to the above-described step S74.

If the determination result is affirmative, the routine proceeds to the end where the process completes.

Now, the above-described emergency-retraction-control process in step S07 will be described.

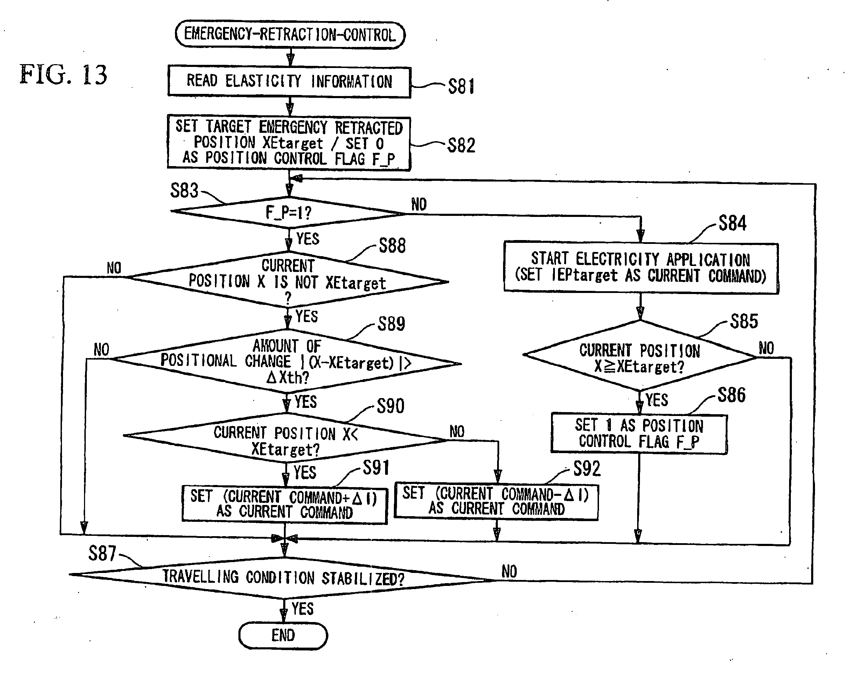

First, in step S81 shown in Fig. 13 for example, elasticity information including the stiffness level is obtained.

In step S82, a predetermined target emergency-retracted-position XEtarget, which is a target value for the rotational position of the belt reel 14 in the emergency-retraction-control and an amount of current change ΔI as the control gain in the emergency-retraction-control are set up based on the elasticity information. Then, 0 is set as a flag value of a position control flag F_P instructing execution of the position control to increase and decrease the amount of electricity applied to the motor 10 so that the rotational position of the belt reel 14 is kept in the target emergency-retracted-position XEtarget.

For example, when the stiffness level is high, the target emergency-retracted-position XEtarget and the amount of current change ΔI are smaller than those in the case where the stiffness level is intermediate. When the stiffness level is low, the target emergency-retracted-position XEtarget and the amount of current change ΔI are larger than those in the case where the stiffness level is intermediate.

In step S83, it is determined whether the flag value of the position control flag F_P is 1.

If the determination result is affirmative, the routine proceeds to step S88, which is to be described later.

If the determination result is negative, the routine proceeds to step S84.

In step S84, a predetermined target emergency-retracting-current IEPtarget is set as a current command for the electricity applied to the motor 10, and application of electricity is started according to the current command.

In step S85, it is determined whether the current rotational position X of the belt reel 14 detected at this time is larger than the target emergency-retracted-position XEtarget.

If the determination result is negative, the routine proceeds to step S87, which is to be described later.

If the determination result is affirmative, the routine proceeds to step S86 where 1 is set as a flag value of the position control flag F_P, and the routine proceeds to step S87.

In step S87, it is determined whether the vehicle travelling condition is stabilized.

If the determination result is negative, the routine returns to the above-described step S83.

If the determination result is affirmative, the routine proceeds to the end and process completes.

In step S88, it is determined whether the current rotational position X of the belt reel 14 detected at this time differs from the target emergency-retracted-position XEtarget.

If the determination result is negative, the routine proceeds to the above-described step S87.

If the determination result is affirmative, the routine proceeds to step S89.

In step S89, it is determined whether the absolute value |(X-XEtarget)| of an amount of positional change obtained by subtracting the target emergency-retracted-position XEtarget from the current position X is larger than the predetermined amount threshold of the positional change ΔXth.

If the determination result is negative, the routine proceeds to step S87.

If the determination result is affirmative, the routine proceeds to step S90.

In step S90, it is determined whether the current position X is smaller than the target emergency-retracted-position XEtarget.

If the determination result is affirmative, the routine proceeds to step S91 where a value obtained by adding the predetermined amount of current change ΔI in the emergency-retraction-control to the current command (i.e., the current command+ΔI) is newly set as the current command. Then, the routine proceeds to step S87.

If the determination result is negative, the routine proceeds to step S92 where a value obtained by subtracting the amount of current change ΔA from the current command (i.e., the current command-ΔI) is newly set as the current command. Then, the routine proceeds to step S87.

As describe above, according to the vehicle seat belt apparatus 1 of the present embodiment, the webbing 5 is retracted by the motor 10 driven with the predetermined current I0 and then the driving force is decoupled by the clutch in the power transmission mechanism 18 so that the return amount of the webbing 5 in the withdrawal direction is measured. With this configuration, a loosened state of the webbing 5 can be measured directly. Based on the measurement result, the control target (i.e., the target current Itarget or the current command) and the control gain (i.e., the amount of current change I) in each control mode (i.e., the constant-current-control mode, the keep-position-control mode and the emergency-retraction-control mode) is switched so that a loosened state of the webbing 5 can be reflected in execution of each control mode appropriately.

In the above-described embodiment, in each control mode (i.e., the constant-current-control mode, the keep-position-control mode and the emergency-retraction-control mode), the control target (i.e., the target current Itarget or the current command) and the control gain (i.e., the amount of current change ΔI) are changed based on the amount of positional change (X0-X1). For example, either of the control target or control gain may be changed.

## Claims

1. A vehicle seat belt apparatus (1) comprising:
a belt reel (14) onto which a webbing (5) is retracted;
a position detection section (24, 51) which detects a rotational position of the belt reel (14);
a motor (10) which provides driving force to the belt reel (14) so as to drive the belt reel (14) to rotate;
a clutch mechanism which couples and decouples the driving force between the motor (10) and the belt reel (14); and
a control section (56) which controlls the clutch mechanism and an amount of electricity applied to the motor (10),
**characterised by that**
the control section (56) includes a return-amount-measurement section (52);
the control section (56) decouples the connection of the clutch mechanism after the motor (10) is driven with a predetermined amount of electricity; and
the return-amount-measurement section (52) measures a return amount in a withdrawal direction of the belt reel (14) based on a rotational position of the belt reel (14) detected by the position detection section (24, 51), after a decoupling by the clutch mechanism.

2. A vehicle seat belt apparatus according to claim 1, wherein:
the control section (56) further includes a constant-current-control mode executing section (S04) which executes in a constant-current-control mode in which the amount of electricity applied to the motor (10) is kept in a predetermined amount; and
the control section (56) changes a target amount of electricity in the constant-current-control mode, or a control gain in the constant-current-control mode, based on the return amount

3. A vehicle seat belt apparatus according to claim 1 or 2, wherein:
the control section (56) further includes a keep-position-control mode executing section (S06) which executes in a keep-position-control mode in which the amount of electricity applied to the motor (10) is controlled to increase and decrease so that the rotational position of the belt reel (14) is kept in a predetermined position; and
the control section (56) changes the target keeping position in the keep-position-control mode, or a control gain in the keep-position-control mode, based on the return amount.

4. A vehicle seat belt apparatus according to any one of claims 1 to 3, wherein:
the control section (56) further includes an emergency-retraction-control mode executing section (S07) which executes in an emergency-retraction-control mode in which the amount of electricity applied to the motor (10) is set as the maximum current, and the amount of electricity applied to the motor (10) is controlled to increase and decrease so that the rotational position of the belt reel (14) is kept in a predetermined retracted position when the rotational position of the belt reel (14) detected by the position detection section (24, 51) reaches a predetermined retracted position; and
the control section (56) changes the predetermined retracted position in the emergency-retraction-control mode, or a control gain in the emergency-retraction-control mode based on the return amount.

## Patentansprüche

1. Fahrzeugsicherheitsgurtvorrichtung (1), umfassend:
eine Gurtrolle (14), auf die ein Gurt (5) aufgewickelt wird;
einen Positionserfassungsabschnitt (24, 51), der eine Drehposition der Gurtrolle (14) erfasst;
einen Motor (10), der der Gurtrolle (14) eine Antriebskraft gibt, um die Gurtrolle (14) drehend anzutreiben;
einen Kupplungsmechanismus, der die Antriebskraft zwischen dem Motor (10) und der Gurtrolle (14) koppelt und entkoppelt; und
einen Steuerabschnitt (56), der den Kupplungsmechanismus und einen an den Motor (10) angelegten Elektrizitätsbetrag steuert/regelt,
**dadurch gekennzeichnet, dass** der Steuerabschnitt (56) einen Rückkehrbetragmessabschnitt (52) enthält;
der Steuerabschnitt (56) die Verbindung des Kupplungsmechanismus entkoppelt, nachdem der Motor (10) mit einem vorbestimmten Elektrizitätsbetrag angetrieben wird; und
der Rückkehrbetragmessabschnitt (52) einen Rückkehrbetrag in Abzugsrichtung der Gurtrolle (14) basierend auf einer von dem Positionserfassungsabschnitt (24, 51) erfassten Drehposition der Gurtrolle (14) nach Entkupplung durch den Kupplungsmechanismus misst.

2. Fahrzeugsicherheitsgurtvorrichtung nach Anspruch 1, worin:
der Steuerabschnitt (56) ferner einen Konstantstromsteuermodus-Ausführungabschnitt (S04) enthält, der einen Konstantstromsteuermodus ausführt, indem der an den Motor (10) angelegte Elektrizitätsbetrag auf einem vorbestimmten Betrag gehalten wird; und
der Steuerabschnitt (56) einen Sollelektrizitätsbetrag im Konstantstromsteuermodus oder einen Steuerfaktor im Konstantstromsteuermodus basierend auf dem Rückkehrbetrag ändert.

3. Fahrzeugsicherheitsgurtvorrichtung nach Anspruch 1 oder 2, worin:
der Steuerabschnitt (56) ferner einen Positionshaltesteuermodus-Ausführungsabschnitt (S06) enthält, der einen Positionshaltesteuermodus ausführt, indem der an den Motor (10) angelegte Elektrizitätsbetrag so gesteuert wird, dass er zunimmt und abnimmt, sodass die Drehposition der Gurtrolle (14) in einer vorbestimmten Position gehalten wird; und
der Steuerabschnitt (56) die Sollhalteposition in dem Positionshaltesteuermodus oder einen Steuerfaktor in dem Positionshaltesteuermodus basierend auf dem Rückkehrbetrag ändert.

4. Fahrzeugsicherheitsgurtvorrichtung nach einem der Ansprüche 1 bis 3, worin:
der Steuerabschnitt (56) ferner einen Notaufrollsteuermodus-Ausführungsabschnitt (S07) enthält, der einen Notaufrollsteuermodus ausführt, indem der an den Motor (10) angelegte Elektrizitätsbetrag als der maximale Strom gesetzt wird, und der an den Motor (10) angelegte Elektrizitätsbetrag so gesteuert wird, dass er zunimmt und abnimmt, sodass die Drehposition der Gurtrolle (14) in einer vorbestimmten Aufrollposition gehalten wird, wenn die von dem Drehpositionserfassungsabschnitt (54, 51) erfasste Drehposition der Gurtrolle (14) eine vorbestimmte Aufrollposition erreicht; und
der Steuerabschnitt (56) die vorbestimmte Aufrollposition in dem Notaufrollsteuermodus oder einen Steuerfaktor in dem Notaufrollsteuermodus basierend auf dem Rückkehrbetrag ändert.

## Revendications

1. Appareil de ceinture de sécurité (1) de véhicule, comprenant :
un enrouleur de ceinture (14) sur lequel une sangle (5) est rétractée ;
une section de détection de position (24, 51) qui détecte une position de rotation de l'enrouleur de ceinture (14) ;
un moteur (10) qui fournit la force d'entraînement à l'enrouleur de ceinture (14) afin d'entraîner la rotation de l'enrouleur de ceinture (14) ;
un mécanisme d'embrayage qui couple et découple la force d'entraînement entre le moteur (10) et l'enrouleur de ceinture (14) ; et
une section de réglage (56) qui règle le mécanisme d'embrayage et une quantité d' électricité appliquée sur le moteur (10),
**caractérisé en ce que** :
la section de réglage (56) comprend une section de mesure de quantité de retour (52) ;
la section de réglage (56) découple le raccordement du mécanisme d'embrayage après que le moteur (10) a été entraîné avec une quantité prédéterminée d'électricité ; et
la section de mesure de quantité de retour (52) mesure une quantité de retour dans une direction de retrait de l'enrouleur de ceinture (14) en fonction d'une position de rotation de l'enrouleur de ceinture (14) détectée par la section de détection de position (24, 51), après un découplage par le mécanisme d'embrayage.

2. Appareil de ceinture de sécurité de véhicule selon la revendication 1, dans lequel :
la section de réglage (56) comprend en outre une section d'exécution de mode de réglage de courant constant (S04) qui s'exécute dans un mode de réglage de courant constant dans lequel la quantité d'électricité appliquée sur le moteur (10) est maintenue à une quantité prédéterminée ; et
la section de réglage (56) change une quantité cible d'électricité dans le mode de réglage de courant constant ou un gain de réglage dans le mode de réglage de courant constant, en fonction de la quantité de retour.

3. Appareil de ceinture de sécurité de véhicule selon la revendication 1 ou 2, dans lequel :
la section de réglage (56) comprend en outre une section d'exécution de mode de réglage de maintien de position (S06) qui s'exécute dans un mode de réglage de maintien de position dans lequel la quantité d'électricité appliquée sur le moteur (10) est réglée pour augmenter et diminuer de sorte que la position de rotation de l'enrouleur de ceinture (14) est maintenue dans une position prédéterminée ; et
la section de réglage (56) change la position de maintien cible dans le mode de réglage de maintien de position ou un gain de réglage dans le mode de réglage de maintien de position, en fonction de la quantité de retour.

4. Appareil de ceinture de sécurité de véhicule selon l'une quelconque des revendications 1 à 3, dans lequel :
la section de réglage (56) comprend en outre une section d'exécution de mode de réglage de rétraction d'urgence (S07) qui s'exécute dans un mode de réglage de rétraction d'urgence dans lequel la quantité d'électricité appliquée sur le moteur (10) est déterminée comme étant le courant maximum, et la quantité d'électricité appliquée sur le moteur (10) est réglée pour augmenter et diminuer de sorte que la position de rotation de l'enrouleur de ceinture (14) est maintenue dans une position rétractée prédéterminée lorsque la position de rotation de l'enrouleur de ceinture (14) détectée par la section de détection de position (24, 51) atteint une position rétractée prédéterminée ; et
la section de réglage (56) change la position rétractée prédéterminée dans le mode de réglage de rétraction d'urgence ou un gain de réglage dans le mode de réglage de rétraction d'urgence en fonction de la quantité de retour.
